# EUROPÄISCHE PATENTSCHRIFT

(11) **EP 0 520 052 B1**
(45) Veröffentlichungstag und Bekanntmachung des Hinweises auf die Patenterteilung: **17.07.1996**
(21) Anmeldenummer: 92901778.8
(22) Anmeldetag: 10.01.1992
(51) Int. Cl.: H04B 3/46, H04Q 9/00

(54) **ADRESSIERANORDNUNG**
ADDRESSING ARRANGEMENT
SYSTEME D'ADRESSAGE

(30) Priorität: 15.01.1991 CH 167/91
(43) Veröffentlichungstag der Anmeldung: 30.12.1992
(73) Patentinhaber: VOCKENHUBER, Peter, CH-1427 Bonvillars (CH)
(72) Erfinder: VOCKENHUBER, Peter, CH-1427 Bonvillars (CH)
(74) Vertreter: Kügele, Bernhard
(86) Internationale Anmeldenummer: CH9200004
(87) Internationale Veröffentlichungsnummer: WO9213397

(56) Entgegenhaltungen:
- DE-A- 2 651 284
- DE-A- 3 025 837
- US-A- 4 272 984
- US-A- 4 939 747
- WO91/17633

## Beschreibung

Die Erfindung bezieht sich auf eine Adressieranordnung gemäss dem Oberbegriff des Anspruch 1. In der Literatur werden verschiedene derartige Adressieranordnungen beschrieben, die Schaltstellen adressieren, von denen Information eingelesen wird, oder an die Information ausgegeben wird.

So beschreibt DE 28 00 185 C2 eine derartige Anordnung, die speziell zum Zwecke der Leckdetektion an Fernwärmeleitungen mit Temperatursensoren bestückt ist, und wo der Ort des Lecks aus der Adresse derjenigen Zelle längs des Kabels ermittelt werden kann, an der eine Temperaturerhöhung gemessen wurde.

In DE 30 25 837 C2 wird eine Anordnung beschrieben, die durch expliziten binären Adressenvergleich eine Schaltstelle nach der anderen durchadressiert, wobei über einen Informationsleiter Information von der Messonde am Ort der Schaltstelle zum Kabelkopfrechner geleitet wird.

In CH 89/00134 wird zum Adressieren derartiger Schaltstellen eine Anordnung aus einem Impedanzglied und einem Schalter vorgeschlagen, wobei die Gesamtimpedanz aus Kabellängswiderstand und Schalter für die Adressierung bestimmend ist. Dies vereinfacht den schaltungstechnischen Aufwand zur Adressierung schon beträchtlich.

In WO91/17633 schliesslich wird vorgeschlagen, das Impedanzglied zur Abschwächung des Adressiersignals durch eine aktive, elektronisch ausgeregelte Impedanz zu ersetzen, wodurch die gesamte Schaltstelle nur mehr Komponenten enthält, die sich relativ leicht in Form eines Chips ausführen lassen.

In CH 89/00134 werden Ausführungsbeispiele beschieben, in denen eine komplette Schaltstelle samt einem Wandler für ein physikalisches Phähomen in ein Kabel integriert wird. Dadurch wird es möglich, etwa die Umgebungstemperatur samt ihrer örtlichen Verteilung durch ein vollständig gekapseltes Kabel zu erfassen und durch den Kabelkopfrechner auszuwerten.

Die oben beschriebenen Anordnungen haben den Nachteil, dass keine Informationsausgabe am Ort der Schaltstellen möglich ist, ohne die Ummantelung des Kabels aufzutrennen.

Weiter führt die Beschränkung auf Messungen von physikalischen Grössen dazu, dass nur eigentliche Messaufgaben erfüllt werden können, und dass allgemeinere Informationsein- bzw. -ausgaben nur unter Auftrennung der Kabelummantelung und direkter Ankoppelung der Informationsquelle bzw. -Senke an die Adressieranordnung möglich sind.

Der vorliegenden Erfindung liegt die Aufgabe zugrunde, diese Nachteile zu überwinden, und Informationsein- bzw. Ausgabe ohne Verzicht auf eine Schutzummantelung zu ermöglichen.

Im Weiteren werden Besonderheiten und Ausführungsdetails anhand von zwei Figuren genauer beschrieben. Es zeigen:

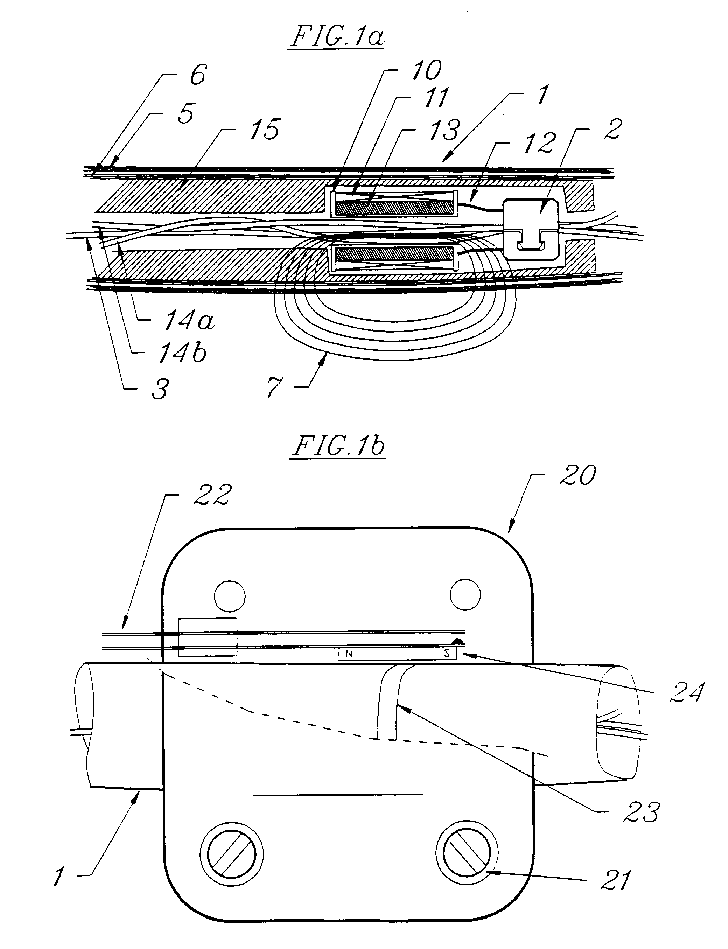

Fig. 1a und 1b eine besonders vorteilhafte Ausführungsform der Erfindung zur Informationsausgabe wobei ein Magnetfeld als Trägersignal moduliert wird. Dabei wird in der Fig.1a die Erzeugung des modulierten Magnetfeldes gezeigt, und in der Fig.1b eine Vorrichtung mit einem Relais - Kontakt zum Abgriff der so erzeugten Information.

Im Beispiel der Fig.1a wird die Information aus der Schaltstelle (2) des Kabels (1) durch ein moduliertes Magnetfeld (7) nach aussen übertragen. Die Information, in welcher Richtung ein Strom durch die Erregerspule (11) geschickt werden soll, wird durch den Informationsleiter (3) übertragen, und mittels einer geeigneten elektronischen Schaltung in die Erregerspule (11) eingespeist.

Die Schaltstelle (2) ist in der Fig. durch ein 'Crimp' - System mit den Leitern des Kabels verbunden, kann jedoch auch auf eine beliebige, andere Weise elektrisch mit den Leitern des Kabels verbunden werden.

Die Schaltstelle dekodiert, sobald sie adressiert wurde, das Signal des Informationsleiters (3) und setzt dieses in ein Stromsignal um, das durch die Zuleitungen (12) an die Erregerspule (11) übertragen wird.

Die Adressierungstechnik der einzelnen Schaltstellen des Kabels ist hierbei nicht von Bedeutung; sie kann gemäss einer der vorerwähnten Methoden vorgenommen werden. Im Ausführungsbeispiel der Fig. 1a wird angenommen, dass Adressierung und Versorgung der Schaltstellen (2) des Kabels (1) durch die zwei Leiter (14a) und (14b) bewerkstelligt werden.

In der Fig.1a sind die Feldlinien des Feldes, das durch die Spule erzeugt wird, auf einer Seite eingezeichnet. Die Richtung des so erzeugten Feldes ändert mit der Stromflussrichtung durch die Erregerspule (11), und diese kann gemäs des über den Informationsleiter übertragenen Signals eingestellt werden, sodass schliesslich die Feldstärke und -richtung des physikalischen Trägersignals (7) proportional zur übertragenen Information ist, die von dem, in der Figur nicht gezeigten Kabelkopfrechner (4) ausgesendet wird.

Die Erregerspule (11) besteht im Beispiel aus einem Spulenkörper (10) und einem ferromagnetischen Medium (13), das sich verstärkend auf das magnetische Signal (7) auswirkt.

Im Falle dass die Schaltstellen (2) des Kabels (1) zyklisch adressiert werden, ist es vorteilhaft, dieses ferromagnetische Medium (13) aus einem Material mit besonders grosser Hysterese herzustellen, sodass die magnetische Information auch dann aussen am Kabel abgreifbar ist, wenn der Erregerstrom nicht fliesst. Die übermittelte Information wird dabei im Medium (13) gespeichert, und die Intervalle zwischen wiederholten Adressiervorgängen der Schaltstelle können derart überbrückt werden.

Um die sich durch den Spulenkörper (10), die Erregerspule (11) und das ferromagnetische Medium (13) ergebenden Dickenunterschiede des Kabels auszugleichen wurde im Beispiel ein Ausgleichskörper (15) vorgesehen, der zugleich eine Schutzwirkung gegenüber Umwelteinflüssen hat. Dieser wird von einer Abschirmung umgeben, die als Schutzmantel gegen elektromagnetische Störungen (6) dient, und die Aufgabe hat, eventuelle Störsignale, die von aussen eindringen könnten, und die die Adressiertechnik der Schaltstellen (2) stören könnte, zuverlässig abzuschirmen. Rleiter ist ein Schutzmantel gegen Umwelteinflüsse (5) vorgesehen, der verhindert, dass z.B. Feuchtigkeit in das Innere des Kabels eindringen kann.

Die Feldlinien (7) können die Ummantelungen (5) und (6) und den Ausgleichskörper (15) im gewählten Beispiel problemlos durchdringen, da diese nur relativ hochfrequente elektromagnetische Strahlung abschirmen. Beim physikalischen Trägersignal (7) hingegen handelt es sich im Beispiel um ein statisches Magentfeld, das die Abschirmungen und Ummantelungen (5> und (6) problemlos durchdringen kann, da die Materialien, aus denen sie bestehen, nicht ferromagnetisch sind.

Es ist jedoch selbstverständlich möglich, und je nach Anwendung vorzuziehen, anstelle eines derart modulierten Magnetfeldes ein anderes physikalisches Trägersignal zu modulieren. Beispiele dafür sind etwa hochfrequente elektromagnetische Felder, wobei jedoch der Schutzmantel gegen elektromagnetische Störungen (6) derart ausgelegt werden muss, dass das Trägersignal die Kabelummantelungen durchdringen kann. Eine andere Möglichkeit besteht darin, die Information nach aussen durch moduliertes Licht zu übertragen, wobei selbstverständlich gewährleistet sein muss, dass die Kabelummantelungen im verwendeten Frequenzbereich durchsichtig sind.

Eine Möglichkeit, diese Durchlässigkeit zu gewährleisten besteht darin, eine kleine Zone des Schutzmantels gegen elektromagnetische Störungen offenzulassen, und durch das derart erzeugte Fenster (8) die entsprechende Information nach aussen zu schicken.

Die Fig.1b zeigt ein Beispiel, wie die Information aussen am Kabel (1) abgegriffen werden kann. Dazu dient eine vom Kabel vollkommen trennbare Halterung (20), die mittels Klemmschrauben (21) an jedem beliebigen Ort des Kabels befestigt werden kann. Natürlich wird man die Halterung (20) an solchen Stellen anbringen, die durch eine aussen sichtbar angebrachte Kennzeichnung (23) anzeigen, dass darunter eine Schaltstelle (2) sitzt.

Das, gemäss übertragener Information modulierte Magnetfeld (7) (Fig.1) bewirkt dann, dass je nach Vorzeichen des Erregerstroms der Permanentmagnet (24) entweder zum Kabel angezogen, oder von ihm abgestossen wird. Dadurch werden die Federkontakte (22) geöffnet bzw. geschlossen, und die an die Schaltstelle (2) übermittelte Information kann an den herausgeführten Enden der Federkontakte (22) abgegriffen werden.

Selbstverständlich kann der Abgriff dieser Information ausserhalb des Kabels auch auf beliebige andere Weise erfolgen. Man könnte beispielsweise ohne weiteres anstelle des Permanentmagneten (24) und des Kontaktfederpaares (22) eine Hallsonde nehmen, die die magnetische Feldstärke in eine Spannung umsetzt. Dies kann dort von Vorteil sein, wo mechanisch bewegte Teile nicht einsetzbar sind, oder wo analoge Information durch ein proportional moduliertes Trägersignal übertragen werden soll.

Die Ausführungsform im Beispiel der Fig.1b hat hingegen den Vorteil, dass man ohne externe Spannungsversorgung ausgekommen kann.

Selbstverständlich ist es möglich, die Richtung des Informationsflusses umzudrehen. So könnte etwa ausserhalb des Kabels ein mechanisch betätigter Schalter oder Taster mit einem Permanentmagneten verbunden sein, der je nach Stellung die Feldrichtung umdreht. Das Feld könnte anschliessend ohne Schwierigkeiten unter der Kabelummantelung, am Ort der Schaltstelle durch eine Hallsonde gemessen werden, und die Information über die Schalterstellung kann an den Kabelkopfrechner geleitet werden.

Weiter ist es selbstverständlich möglich, andere Wandler - Transmitterpaare zur Modulation von anderen physikalischen Grössen einzusetzen, für die die Kabelummantelungen (5) und (6) entweder durchlässig sind, oder für die in diesen ein Fenster vorgesehen ist. So kann man mit einer Paarung von einer Leuchtdiode und einem Fototransistor ein Wandler-Transmitterpaar vorsehen, das durch Licht Information aus dem Kabel überträgt oder in es hineinbringt. Diese Technik wird sich insbesondere dort empfehlen, wo man ein elektromagnetisch stark gestörtes Umfeld vorfindet.

Eine weitere, einfache Möglichkeit eines Wandler - Transmitterpaares besteht in der kapazitiven und induktives Ein- bzw. Auskopplung von Information durch die Kabelummantelungen (5) und (6). Wandler bzw. Transmitter sind in diesem Falle entsprechend Kondensatoren oder Induktionsschleifen, die das modulierte Signal empfangen bzw. aussenden.

Diese Ein- bzw. Auskopplungsarten haben den Vorteil dass sie Information mit grosser Geschwindigkeit übertragen können, und sie sind daher auch besonders im Zusammenhang mit Datenverarbeitung vorteilhaft.

## Patentansprüche

1. Adressieranordnung längs eines Kabels (1), wobei Schaltstellen (2) adressiert werden, die über mindestens einen Informationsleiter (3) mit einem Kabelkopfrechner (4) verbunden sind, über den Information zu - bzw. von der adressierten Schaltstelle (2) geleitet wird, **dadurch gekennzeichnet**,
dass die Schaltstellen (2) vollständig in das Kabel (1) integriert und von Schutz- Ummantelungen gegen Umwelteinflüsse (5) und/oder gegen elektromagnetische Störungen (6) geschützt sind,
dass Mittel vorhanden sind, um die Informationsübertragung zu bzw. von der Schaltstelle (2) auf ein physikalisches Trägersignal (7) zu modulieren, und dass die Schutz-Ummantelungen (5) und/oder (6) des Kabels (1) für das physikalische Trägersignal durchlässig sind.

2. Adressieranordnung nach Anspruch 1, **dadurch gekennzeichnet**, dass die Orte, an denen Informationseingabe- bzw. -Ausgabeschaltstellen (2) angebracht sind, von aussen sichtbar gekennzeichnet sind.

3. Adressieranordnung nach einem der Ansprüche 1 bis 2 **dadurch gekennzeichnet**, dass die Schutz- Ummantelungen (5) und/oder (6) im Bereich der Schaltstellen Fenster (8) aufweisen, die für das physikalische Trägersignal (7) durchlässig sind.

## Claims

1. Addressing arrangement using a cable (1), where addressable units (2) are addressed being connected to a cable terminal processor (4) by at least an information wire (3) conducting information to or from the addressable unit (2), wherein
the addressable units (2) are completely integrated into the cable (1) where they are protected by shiedlding means against environmental influences (5) and/or against electromagnetic influences (6), wherein
means are provided to modulate the information to be transmitted to or from the addressable unit (2) on a physical carrier signal (7), and where the shielding means (5) and/or (6) of the cable (1) are transparent to the said carrier signal.

2. Adressing arrangement as set forth in claim 1, **wherein** the locations of addressable units (2) for the input or output of information are marked by marking means that are visible at the outer side of the cable.

3. Addressing arrangement as set forth by one of the claims 1 or 2 **wherein** the shielding means (5) and/or (6) have windows (8) in the region of the addressable units that are transparent for the physical carrier signal (7).

## Revendications

1. Arrangement pour l'adressage le long d'un câble (1), où des unités adressables (2) sont adressées, lesquelles sont connectées par au moins un conducteur d'information (3) avec un processeur en tête de câble (4), par lequel l'information est conduite en direction de, ou en provenance de l'unité adressable (2),
**caractérisé en ce que**
les unités adressables (2) sont complètement intégrées dans le câble (1) et protégées par des gaines de protection contre les influences environnemenentales (5) et/ou électromagnétiques (6),
en ce que des moyens sont prévus, pour moduler l'information transmise en direction de, ou en provenance de l'unité adressable (2) sur un signal porteur physique (7), et en ce que les gaines de protection (5) et/ou (6) du câble (1) sont transparentes pour le signal porteur.

2. arrangement d'adressage selon la revendication 1 caracterisé en ce que les lieux où sont situées les unités adressables pour la sortie ou l'entrée d'information (2) sont marqués de manière visible depuis l'extérieur.

3. arrangement d'adressage selon l'une des revendications 1 à 2 **caractérisé en ce que**, les gaines protectrices (5) et/ou (6) sont munies de fenêtres (8) transparentes dans la région des unités adressables, pour le porteur physique (7).
